(19) Europäisches Patentamt
European Patent Office
Office européen des brevets

(11) Veröffentlichungsnummer: **0 267 276**
**B1**

(12) # EUROPÄISCHE PATENTSCHRIFT

(45) Veröffentlichungstag der Patentschrift: **02.05.90**

(51) Int. Cl.[5]: **C 09 K 19/30,** C 09 K 19/34, C 09 K 19/02

(21) Anmeldenummer: **87903690.3**

(22) Anmeldetag: **09.05.87**

(86) Internationale Anmeldenummer:
**PCT/EP87/00243**

(87) Internationale Veröffentlichungsnummer:
**WO 87/07290 03.12.87 Gazette 87/27**

(54) **SMEKTISCHE FLÜSSIGKRISTALLINE PHASEN ENTHALTEND BICYCLOOCTANESTER.**

(30) Priorität: **23.05.86 DE 3617434**

(43) Veröffentlichungstag der Anmeldung:
**18.05.88 Patentblatt 88/20**

(45) Bekanntmachung des Hinweises auf die Patenterteilung:
**02.05.90 Patentblatt 90/18**

(84) Benannte Vertragsstaaten:
**CH DE FR GB LI**

(56) Entgegenhaltungen:
**WO-A-87/01113**
**GB-A-2 071 649**
**GB-A-2 134 535**

**Molecular Crystals and Liquid Crystals, vol. 130, No. 3/4, 1985, Gordon and Breach, Science Publishers, Inc. and OPA Ltd. (US), N. Carr et al.: "Some new mesogenic esters incorporating the 1,4-disubstituted bicyclo (2.2.2) octane ring system", pages 265-279**

(73) Patentinhaber: **MERCK PATENT GESELLSCHAFT MIT BESCHRÄNKTER HAFTUNG**
**Frankfurter Strasse 250 Postfach 4119**
**D-6100 Darmstadt (DE)**

(72) Erfinder: **GEELHAAR, Thomas**
**Trajanstrasse 12**
**D-6500 Mainz (DE)**
Erfinder: **SCHEUBLE, Bernhard**
**Bluff 100, 100-1 Yamate-cho Naka-ku,**
**Yokohama-shi**
**Kanagawa 231 (JP)**
Erfinder: **KRAUSE, Joachim**
**Samuel-Morse-Strasse 14**
**D-6110 Dieburg (DE)**
Erfinder: **REIFFENRATH, Volker**
**Pfungstädter Strasse 31**
**D-6100 Darmstadt (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 267 276 B1

Courier Press, Leamington Spa, England.

**Beschreibung**

Die Erfindung betrifft die Verwendung von Verbindungen der der Formel I

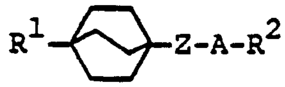

I

worin

$R^1$ und $R^2$ jeweils eine Alkylgruppe mit 4 bis 15 C-Atomen, worin auch eine oder mehrere nicht banachbarte $CH_2$-Gruppen durch —O—, —S—, —CO—, —$CHCH_3$—O—, —$CHCH_3$—, —CH-Halogen-, —CHCN—, —O—CO—, —O—COO—, —CO—O— und/oder —CH=CH— ersetzt sein können,

Z —CO—O— oder —O—CO— und

A unsubstituiertes oder durch Fluor lateral substituiertes 1,4-Phenylen oder 4,4'-Biphenylyl bedeutet, worin auch eine oder mehrere CH-Gruppen durch N ersetzt sein können,

als Komponenten chiral getilteter smektischer Phasen, sowie chirale getiltete smektische flüssigkristalline Phasen enthaltend Verbindungen der Formel I.

Chirale getiltete smektische flüssigkristalline Phasen mit ferroelektrischen Eigenschaften können hergestellt werden, in dem man Basis-Mischungen mit einer oder mehreren getilteten smektischen Phasen mit einem geeigneten chiralen Dotierstoff versetzt (L. A. Beresnev et al., Mol. Cryst. Liq. Cryst. *89,* 327 (1982); H. R. Brand et al., J. Physique *44* (lett.), L-771 (1983). Solche Phasen können als Dielektrika für schnell schaltende Displays verwendet werden, die auf dem von Clark und Lagerwall beschriebenen Prinzip der SSFLC-Technologie (N. A. Clark und S. T. Lagerwall, Appl. Phys. Lett. *36,* 899 (1980); USP 4,367,924) auf der Basis der ferroelektischen Eigenschaften der chiral getilteten Phase beruhen. In dieser Phase sind die langgestreckten Moleküle in Schichten angeordnet, wobei die Moleküle einen Tiltwinkel zur Schichtennormalen aufweisen. Beim Fortschreiten von Schicht zu Schicht ändert sich die Tiltrichtung um einen kleinen Winkel bezüglich einer senkrecht zu den Schichten stehenden Achse, so daß eine Helixstruktur ausgebildet wird. In Displays, die auf dem Prinzip der SSFLC-Technologie beruhen, sind die smektischen Schichten senkrecht zu den Platten der Zelle angeordnet. Die helixartige Anordnung der Tiltrichtungen der Mokeküle wird durch einen sehr geringen Abstand der Platten (ca. 1—2 µm) unterdrückt. Dadurch werden die Längsachsen der Moleküle gezwungen, sich in einer Ebene parallel zu den Platten der Zelle anzuordnen, wodurch zwei ausgezeichnete Tiltorientierungen entstehen. Durch Anlegen eines geeigneten elektrischen Wechselfeldes kann in der eine spontane Polarisation aufweisenden flüssigkristallinen Phase zwischen diesen beiden Zuständen hin- und hergeschaltet werden. Dieser Schaltvorgang ist wesentlich schneller als bei herkömmlichen verdrillten Zellen (TN-LCD's), die auf nematischen Flüssigkristallen basieren.

Ein großer Nachteil für viele Anwendungen der derzeit verfügbaren Materialien mit chiral getilteten smektischen Phasen (wie z.B. Sc*, jedoch auch $S_H$*, $S_I$*, $S_J$*, $S_K$*, $S_G$*, $S_F$*) ist deren geringe chemische, thermische und Photo-Stabilität. Eine weitere nachteilige Eigenschaft von Displays basierend auf derzeit verfügbaren chiral getilteten smektischen Mischungen ist, daß die Spontanpolarisation zu kleine Werte aufweist, so daß das Schaltzeitverhalten der Displays ungünstig beeinflußt wird und/oder die optische Anisotropie und/oder der Pitch und/oder der Tilt und/oder die Viskosität der Phasen nicht den Anforderungen der Display-Technologie entspricht. Darüberhinaus ist meist der Temperaturbereich der ferroelektrischen Phasen zu klein und liegt überwiegend bei zu hohen Temperaturen.

Es wurde nun gefunden, daß die Verwendung von Verbindungen der Formel I als Komponenten chiral getilteter smektischer Mischungen die erwähnten Nachteile wesentlich vermindern kann. Die Verbindungen der Formel I sind somit als Komponenten chiral getilteter smektischer flüssigkristalliner Phasen vorzüglich geeignet. Insbesondere sind mit ihrer Hilfe chemisch besonders stabile chiral getiltete smektische flüssigkristalline Phasen mit günstigen ferroelektrischen Phasenbereichen bei tiefen Temperaturen, günstigen Werten für die Viskosität und die Schaltzeiten, niedriger optischer Anisotropie, insbesondere mit breiten Sc* Phasenbereichen, hervorragender Unterkühlbarkeit bis zu Temperaturen unter 0°C ohne daß Kristallisation auftritt und für derartige Phasen hohen Werten für die spontane Polarisation herstellbar. P ist die spontane Polarisation in $nC/cm^2$.

Die Verbindungen der Formel I besitzen einen breiten Anwendungsbereich. In Abhängigkeit von der Auswahl der Substituenten können diese Verbindungen als Basismaterialien dienen, aus denen flüssigkristalline smektische Phasen zum überwiegenden Teil zusammengesetzt sind; es können aber auch Verbindungen der Formel I flüssigkristallinen Basismaterialien aus anderen Verbindungklassen zugesetzt werden, um beispielsweise die dielektrische und/oder optische Anisotropie und/oder die Viskosität und/oder die spontane Polarisation und/oder den Phasenbereiche und/oder der Tiltwinkel und/oder den Pitch eines solchen Dielektrikums zu variieren.

Gegenstand der Erfindung ist somit die Verwendung der Verbindungen der Formel I als Komponenten chiral getilteter smektischer flüssigkristalliner Phasen. Gegenstand der Erfindung sind ferner chiral getiltete smektische flüssigkristalline Phasen mit einem Gehalt an mindestens einer Verbindung der Formel I sowie Flüssigkristallanzeigeelemente, insbesondere ferroelektrische elektrooptische Anzeigeelemente, die derartige Phasen enthalten.

Besonders bevorzugt sind erfindungsgemäße chiral getiltete smektische flüssigkristalline Phasen, deren achirale Basismischung neben Verbindungen der Formel I mindestens eine andere Komponente mit negativer oder betragsmäßig kleiner positiver dielektrischer Anisotropie enthält. Diese weiteren Komponente(n) der achiralen Basismischung können 1 bis 50%, vorzugsweise 10 bis 25%, der Basismischung ausmachen. Als weitere Komponenten mit betragsmäßig kleiner positiver oder negativer dielektrischer Anisotropie eignen sich Verbindungen der Formel II, welche die Verbindungen der Teilformeln IIa bis IIi umfaßt:

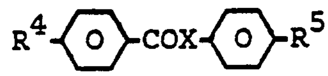

IIa

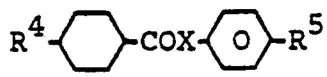

IIb

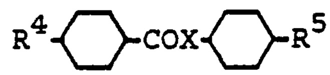

IIc

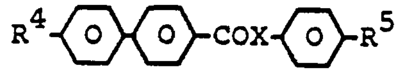

IId

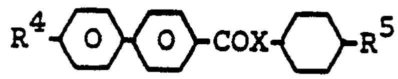

IIe

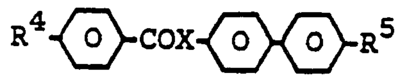

IIf

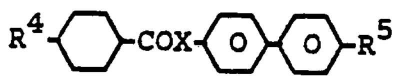

IIg

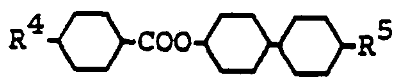

IIh

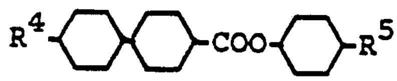

IIi

$R^4$ und $R^5$ sind jeweils vorzugsweise geradkettiges Alkyl, Alkoxy, Alkanoyloxy oder Alkoxycarbonyl mit jeweils 3 bis 12 C-Atomen. X ist vorzugsweise O. In den Verbindungen der Formeln IIa, IIb, IId, IIe, IIf und IIg kann auch eine 1,4-Phenylengruppe lateral durch Halogen oder CN, insbesondere bevorzugt durch Fluor, substituiert sein.

Besonders bevorzugt sind die Verbindungen der Teilformeln IIa, IIb, IId und IIf, worin $R^4$ und $R^5$ jeweils geradkettiges Alkyl oder Alkoxy mit jeweils 5 bis 10 C-Atomen bedeutet.

Besonders bevorzugte Einzelverbindungen sind in der folgenden Tabelle angegeben:

| Formel | $R^4$ | $R^5$ | X |
|---|---|---|---|
| IIa | n-Decyloxy | n-Heptyloxy | O |
| IIa | n-Hexyloxy | n-Decyloxy | O |
| IIa | n-Octyloxy | n-Heptyl | O |
| IIa | n-Octyloxy | n-Pentyl | O |
| IIa | n-Decyloxy | n-Heptyl | O |
| IIa | n-Decyloxy | n-Pentyl | O |
| IIf | n-Pentyl | n-Pentyl | O |
| IIf | n-Pentyl | n-Hexyl | O |

Die Verbindungen der Teilformeln IIc, IIh und IIi eignen sich als Zusätze zur Schmelzpunktserniedrigung und werden normalerweise den Basismischungen mit nicht mehr als 5%, vorzugsweise 1 bis 3%, zugesetzt. $R^4$ und $R^5$ bedeuten in den Verbindungen der Teilformeln IIc, IIh und IIi vorzugsweise geradkettiges Alkyl mit 2 bis 7, vorzugsweise 3 bis 5, C-Atomen. Eine weitere zur Schmelzpunktserniedrigung in den erfindungsgemäßen Phasen geeignete Verbindungsklasse ist diejenige der Formel

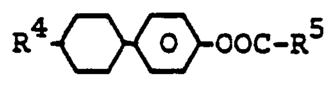

worin $R^4$ und $R^5$ die für IIc, IIh und IIi angegebene bevorzugte Bedeutung haben.

Als weitere Komponenten mit negativer dielektrischer Anisotropie eignen sich weiterhin Verbindungen enthaltend das Strukturelement A, B oder C.

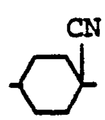

A

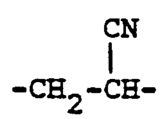

B

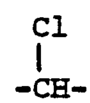

C

Bevorzugte Verbindungen dieser Art entsprechen den Formeln IIIa, IIIb und IIIc:

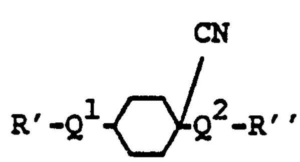

IIIa

$$R'-Q^1-CH_2-\underset{\displaystyle CN}{\underset{|}{CH}}-Q^2-R'' \qquad \text{IIb}$$

$$R'-Q^3-Q^4-R''' \qquad \text{IIIc}$$

R' und R'' bedeuten jeweils vorzugsweise geradkettige Alkyl- oder Alkoxy-Gruppen mit jeweils 2 bis 10 C-Atomen. $Q^1$ und $Q^2$ bedeuten jeweils 1,4-Phenylen, trans-1,4-Cyclohexylen, 4,4'-Biphenylyl, 4-(trans-4-Cyclohexyl)-phenyl, trans,trans-4,4'-Bicyclohexyl oder eine der Gruppen $Q^1$ und $Q^2$ auch eine Einfachbindung.

$Q^3$ und $Q^4$ bedeuten jeweils 1,4-Phenylen, 4,4'-Biphenylyl oder trans-1,4-Cyclohexylen. Eine der Gruppen $Q^3$ und $Q^4$ kann auch 1,4-Phenylen bedeuten, worin mindestens eine CH-Gruppe durch N ersetzt ist. R''' ist ein optisch aktiver Rest mit einem asymmetrischen Kohlenstoffatom der Struktur

$$-\overset{\displaystyle Cl}{\overset{|}{CH^*}}-, \quad -\overset{\displaystyle CH_3}{\overset{|}{CH^*}}- \quad \text{oder} \quad -\overset{\displaystyle CN}{\overset{|}{CH^*}}-.$$

Besonders bevorzugte Verbindungen der Formel IIIc sind diejenigen der Formel IIIc':

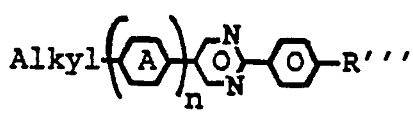

IIIc'

worin A 1,4-Phenylen oder trans-1,4-Cyclohexylen und n 0 oder 1 bedeutet.

Die Verbindungen der Formel I umfassen zweikernige (A = 1,4-Phenylen) und dreikernige Materialien. Von den zweikernigen, welche bevorzugt sind, sind diejenigen bevorzugt, worin $R^1$ n-Alkyl mit 4 bis 12, insbesondere 5 bis 9, C-Atome bedeutet.

$R^2$ ist in den Verbindungen der Formel I vorzugsweise n-Alkoxy mit 6 bis 12, insbesondere mit 7 bis 10, C-Atomen. Vorzugsweise enthalten die erfindungsgemäßen Phasen mindestens eine Verbindung der Formel I, worin $R^2$ n-Hexyloxy, n-Heptyloxy oder n-Octyloxy (vorzugsweise n-Heptyloxy oder n-Octyloxy) bedeutet und mindestens eine Verbindung der Formel I, worin $R^2$ n-Nonyloxy oder n-Decyloxy bedeutet. Die Summe der C-Atome in den Gruppen $R^1$ und $R^2$ der bevorzugten zweikernigen Verbindungen der Formel I ist vorzugsweise 15 oder höher, besonders bevorzugt im Bereich 15 bis 20. Besonders bevorzugte Einzelverbindungen der Formel I sind in der folgenden Tabelle aufgeführt:

| $R^1$ | $R^2$ |
|---|---|
| n-Nonyl | n-Nonyloxy |
| n-Nonyl | n-Hexyloxy |
| n-Octyl | n-Decyloxy |
| n-Octyl | n-Octyloxy |
| n-Octyl | n-Heptyloxy |
| n-Heptyl | n-Decyloxy |
| n-Heptyl | n-Nonyloxy |
| n-Pentyloxy | n-Octyl |
| n-Hexyloxy | n-Hexyl |
| n-Hexyloxy | n-Pentyl |
| n-Pentyloxy | n-Nonyl |
| n-Octyloxy | n-Octyl |

Weiterhin bevorzugt sind Verbindungen der Formel I worin $R^1$ n-Alkyl oder n-Alkoxy mit 5 bis 10 C-Atomen bedeutet und $R^2$ n-Alkanoyloxy, n-Alkoxycarbonyl oder n-Alkylthio mit jeweils 5 bis 10 C-Atomen ist.

Die erfindungsgemäßen Phasen enthalten vorzugsweise mindestens eine dreikernige Verbindung der Formel I. Diese Phasen zeichnen sich durch besonders hohe $S_C/S_A$-Umwandlungstemperaturen aus.

Ferner bevorzugt sind jedoch erfindungsgemäße Phasen enthaltend lediglich Verbindungen der Formel I, worin $A^1$ 1,4-Phenylen bedeutet. Diese Phasen zeichnen sich durch ein besonders günstiges Tieftemperaturverhalten und besonders niedrige Viskositätsweite aus. Ferner bevorzugt sind erfindungsgemäße Phasen enthaltend Verbindungen der Formel I, worin mindestens eine Gruppe $R^1$ oder $R^2$ einen verzweigtkettigen Alkyl- oder Alkoxyrest darstellt. Diese Phasen zeigen ebenfalls ein günstiges Tieftemperaturverhalten.

$R^1$ und $R^2$ sind jeweils unabhängig voneinander vorzugsweise Alkyl, Alkoxy, Alkanoyl, Alkanoyloxy, Alkoxycarbonyl oder Alkoxycarbonyloxy mit jeweils vorzugsweise 5 bis 12, insbesondere 6 bis 10 C-Atomen. Besonders bevorzugt sind Alkyl und Alkoxy. Vorzugsweise ist eine der Gruppen $R^1$ und $R^2$ Alkyl. Eine besonders bevorzugte Kombination ist $R^1$ = Alkyl und $R^2$ = Alkoxy und ferner $R^1$ = Alkoxy und $R^2$ = Alkoxy. Besonders bevorzugt sind $R^1$- und $R^2$-Gruppen mit geradkettigem Alkylrest.

Die Alkylreste in den Gruppen $R^1$ und/oder $R^2$ können geradkettig oder verzweigt sein.

Bevorzugte verzweigte Gruppen $R^1$ oder $R^2$ sind optisch aktive organische Reste mit einem asymmetrischen Kohlenstoffatom. Vorzugsweise ist das asymmetrische Kohlenstoffatom mit zwei unterschiedlich substituierten C-Atomen, einem H-Atom und einem Substituenten ausgewählt aus der Gruppe Halogen (insbesondere F, Cl oder Br), Alkyl oder Alkoxy mit jeweils 1 bis 5 C-Atomen und CN verknüpft. Der optisch aktive organische Rest $R^1$ oder $R^2$ hat vorzugsweise die Formel,

$$-X-Q-\underset{\substack{|\\ Y}}{\overset{*}{C}H}-R$$

worin

X $-CO-O-$, $-O-CO-$, $-O-CO-O-$, $-CO-$, $-O-$, $-S-$, $-CH=CH-$, $-CH=CH-COO-$ oder eine Einfachbindung,

Q Alkylen mit 1 bis 5 C-Atomen, worin auch eine nicht mit X verknüpfte $CH_2$-Gruppe durch $-O-$, $-CO-$, $-O-CO-$, $-CO-O-$ oder $-CH=CH-$ ersetzt sein kann, oder eine Einfachbindung,

Y CN, Halogen, Methyl oder Methoxy, und

R eine von Y verschiedene Alkylgruppe mit 1 bis 18 C-Atomen, worin auch eine oder zwei nicht benachbarte $CH_2$-Gruppen durch, $-O-$, $-CO-$, $-O-CO-$, $-CO-O-$ und/oder $-CH=CH-$ ersetzt sein

können,
bedeutet.

X ist vorzugsweise —CO—O—, —O—CO—, —O—, —CH=CH—COO— (trans) oder eine Einfachbindung. Besonders bevorzugt sind —O—, —CO—O— und —O—CO—.

Q ist vorzugsweise Alkylen mit 1 bis 5 C-Atomen oder eine Einfachbindung, insbesondere bevorzugt $—CH_2—$, $—CH_2CH_2—$ oder eine Einfachbindung.

Y ist vorzugsweise $CH_3$, —CN oder Cl, insbesondere bevorzugt —CN oder Cl.

R ist vorzugsweise geradkettiges Alkyl mit 1 bis 10, insbesondere mit 1 bis 7, C-Atomen, worin gegebenenfalls die mit dem asymmetrischen C-Atom verknüpfte $CH_2$-Gruppe durch —O—, —O—CO— oder —CO—O— ersetzt sein kann.

Vorzugsweise ist $R^2$ in Formel I der optisch aktive Rest.

Weiterhin bevorzugt sind erfindungsgemäße Phasen enthaltend mindestens eine Verbindung der Formel I worin $R^1$ n-Alkyl oder n-Alkoxy mit 5 bis 10 C-Atomen und $R^2$ $—CH_2O—(CH_2)_p—CH_3$, $—(CH_2)_p—O—(CH_2)_r—CH_3$ oder $—O—(CH_2)_q—O—(CH_2)_r—CH_3$ bedeutet.

p ist vorzugsweise 4 bis 10, insbesondere 5 bis 9. q ist vorzugsweise 1 oder 2, insbesondere bevorzugt 2. r ist 4 bis 10, insbesondere bevorzugt 5 bis 9. q kann auch > 2, z.B. 3 bis 5 sein.

Z ist vorzugsweise —CO—O—, A ist vorzugsweise

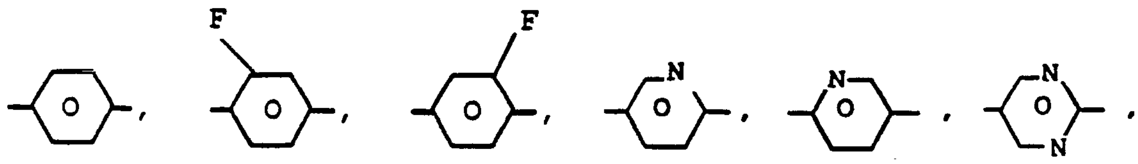

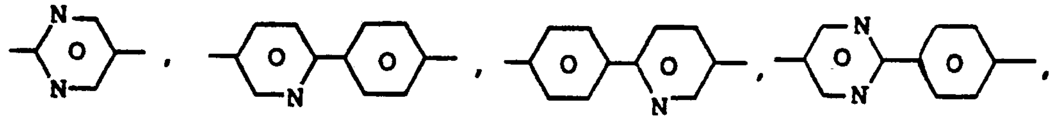

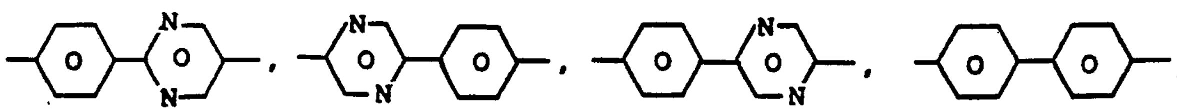

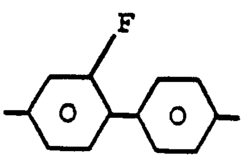 oder 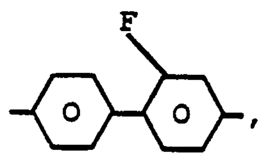, insbesondere bevorzugt 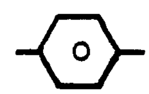.

Besonders bevorzugt ist eine chirale getiltete smektische flüssigkristalline Phase mit mindestens einer Verbindung der Formel I nach Anspruch 1, dadurch gekennzeichnet, daß sie eine flüssigkristalline Komponente mit negativer dielektrischer Anisotropie enthält, insbesondere eine erfindungsgemäße Phase dadurch gekennzeichnet, daß sie als Komponente mit negativer dielektrischer Anisotropie mindestens eine das Strukturelement A, B oder C aufweisende Verbindung enthält.

Weiterhin bevorzugt sind erfindungsgemäße ferroelektrische Phasen enthaltend mindestens eine Verbindung der Formel V

$$R^1—Q^1—A—(Q^2)_q—R^2 \qquad V$$

worin

$R^1$ und $R^2$ jeweils unabhängig voneinander eine geradkettige Alkylgruppe mit 1 bis 15 C-Atomen, worin auch eine oder mehrere nicht benachbarte $CH_2$-Gruppen durch —O—, —S—, —CO—, $CHCH_3—O—$, $—CHCH_3—$, —CH-Halogen-, CHCN—, —O—CO—, —O—COO—, —CO—O— und/oder —CH=CH— ersetzt sein können,

A

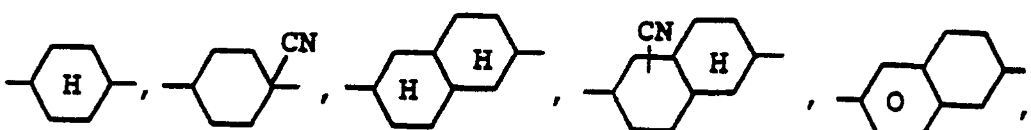

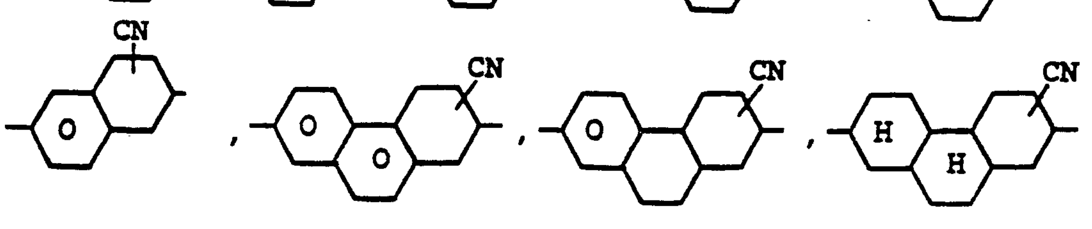

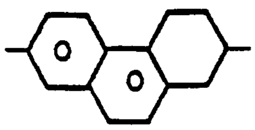, 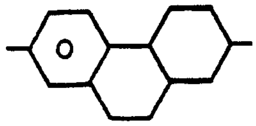, 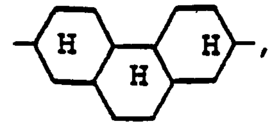, 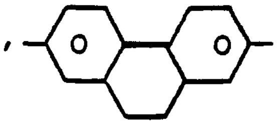,

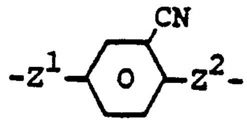 oder 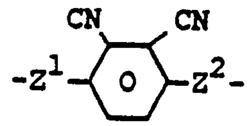

q 0 oder 1,

$Q^1$ und $Q^2$ jeweils unabhängig voneinander, $—(A°—Z°)_p—$, wobei

A° unsubstituiertes oder ein- oder mehrfach durch Halogenatome, $CH_3$- und/oder Nitril-Gruppen substituiertes 1,4-Cyclohexylen, worin auch eine oder zwei nicht benachbarte $CH_2$-Gruppen durch —O— und/oder —S— und/oder eine

—CH—$CH_2$-Gruppierung, durch —C=N—

ersetzt sein können (Cy), oder unsubstituiertes oder ein- oder mehrfach durch Halogenatome, $CH_3$- und/oder Nitril-Gruppen substituiertes 1,4-Phenylen, worin auch eine oder mehrere CH-Gruppen durch N ersetzt sein können (Ph) bedeutet, einer der Reste A° auch 2,6-Naphthylen (Na) oder Tetrahydro-2,6-naphthylen (4H-Na), gegebenenfalls durch Halogen oder CN substituiert,

Z°, $Z^1$ und $Z^2$ jeweils unabhängig voneinander —CO—O—, —O—CO—, —$CH_2$O—, O$CH_2$—, —$CH_2CH_2$—, —CHCN$CH_2$—, —$CH_2$—CHCN— oder eine Einfachbindung, und

p 1, 2 oder 3, oder im Falle A = Tetra- oder Octahydrophenanthren auch O bedeutet, wobei Falle A =

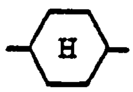, 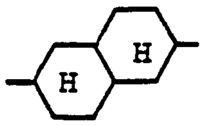, 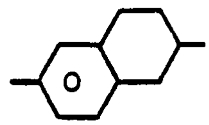 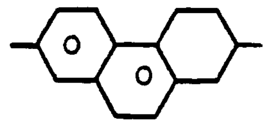, 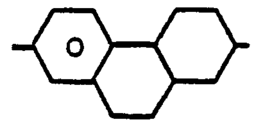

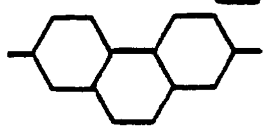 oder 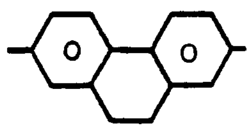

mindestens eine Gruppe Z° —CHCN$CH_2$— oder —$CH_2$CHCN— bedeutet und/oder in mindestens einer der Gruppen $R^1$ und $R^2$ mindestens eine $CH_2$-Gruppe durch —CHCN— ersetzt ist.

Die Verbindungen der Formel V können geradkettige oder verzweigte Flügelgruppen $R^1$ und/oder $R^2$ haben. Verbindungen mit verzweigten Flügelgruppen können in Form des Racemates oder als optisch aktive Verbindungen eingesetzt werden. Achirale Basismischungen aus Verbindungen der Formel V und ggf. weiteren achiralen Komponenten können mit chiralen Verbindungen der Formel I oder auch zusätzlich mit anderen chiralen Verbindungen dotiert werden, um chiral getiltete smektische Phasen zu erhalten.

Besonders bevorzugte kleinere Gruppen von Verbindungen sind diejenigen der Formeln V1 bis V18:

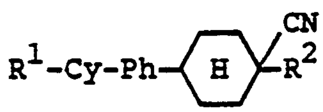 V1

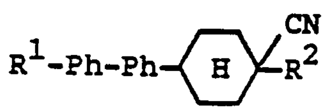 V2

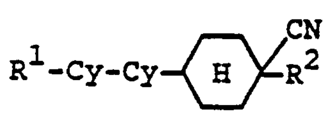 V3

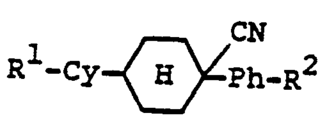 V4

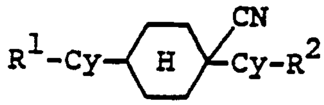 V5

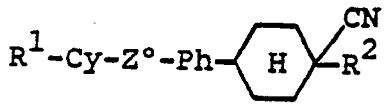 V6

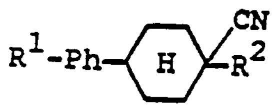 V7

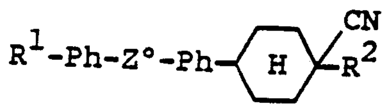 V8

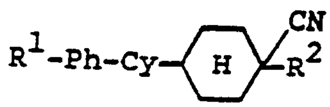 V9

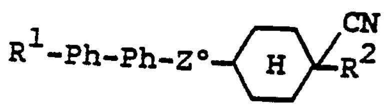 V10

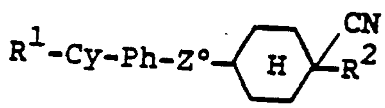 V11

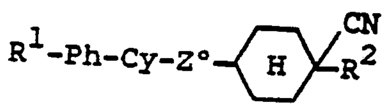 V12

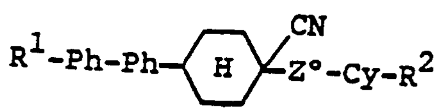 V13

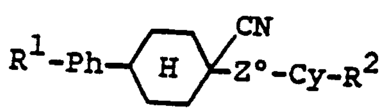 V14

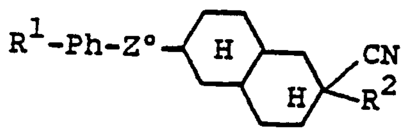 V15

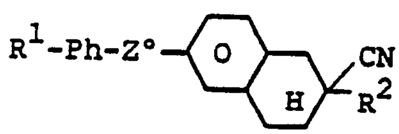 V16

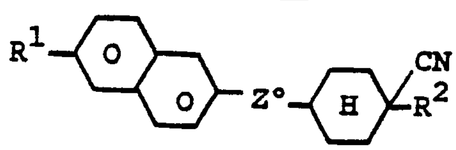 V17

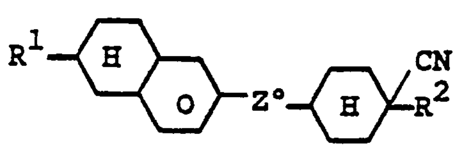 V18

Eine weitere besonders bevorzugte kleinere Gruppe von Verbindungen sind diejenigen der Formeln V19 bis V22:

$$R^1\text{-A°-Cy-}(CH_2)_r\text{-CHCN-}C_sH_{2s+1} \qquad \text{V19}$$

$$R^1\text{-A°-A°-Cy-}(CH_2)_r\text{-CHCN-}C_sH_{2s+1} \qquad \text{V20}$$

$$R^1\text{-A°-A°-CHCN-}CH_2\text{-Cy-}R^2 \qquad \text{V21}$$

$$R^1\text{-A°-A°-}CH_2\text{-CHCN-Cy-}R^2 \qquad \text{V22}$$

worin r 0, 1, 2 oder 3 bedeutet und (r + s) 1 bis 14 ist.

Verbindungen der Formel I, die keine $S_c$-Phasen aufweisen, eigenen sich ebenfalls als Komponenten erfindungsgemäßer smektischer Phasen.

Die erfindungsgemäßen Phasen können ferner auch Verbindungen der Formel

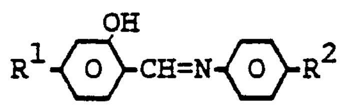

enthalten, worin $R^1$ und $R^2$ die bei Formel V angegebene Bedeutung haben.

Alle Komponenten der erfindungsgemäßen Phasen sind entweder bekannt oder in an sich bekannter Weise analog zu bekannten Verbindungen herstellbar.

Die Herstellung der erfindungsgemäßen Phasen erfolgt in an sich üblicher Weise. In den Regel werden die Komponenten ineinander gelöst, zweckmaßig bei erhöhter Temperatur.

Durch geeignete Zusätze können die flüssigkristallinen Phasen nach der Erfindung so modifiziert werden, daß sie in allen bisher bekannt gewordenen Arten von Flüssigkristallanzeigeelementen verwendet werden können.

Die folgenden Beispiele sollen die Erfindung erläutern. Vor- und nachstehend bedeuten Prozentangaben Gewichtsprozent; alle Temperaturen sind in Grad Celsius angegeben. Die Weite für die spontane Polarisation gelten für Raumtemperatur. Es bedeuten ferner: K: Kristallin-fester Zustand, S: smektische Phase (der Index kennzeichnet den Phasentyp), N: nematischer Zustand, Ch: cholesterische Phase, I: isotrope Phase. Die zwischen zwei Symbolen stehende Zahl gibt die Umwandlungstemperatur in Grad Celsius an.

## Beispiel 1

Eine flüssigkristalline Phase bestehend aus

5% 2-p-Hexyloxyphenyl-5-octylpyrimidin,
5% 2-p-Heptyloxyphenyl-5-octylpyrimidin,
5% 2-p-Octyloxyphenyl-5-octylpyrimidin,
5% 2-p-Nonyloxyphenyl-5-octylpyrimidin,
30% 2-p-Nonyloxyphenyl-5-nonylpyrimidin,
10% p-(5-Nonylpyrimidin-2-yl)-phenyl-(pentylbenzylether)
10% R-4-(5-Hexylpyrimidin-2-yl)-phenyl-2-chlorpropionat,
15% 1-Pentyl-4-(p-octyloxyphenoxycarbonyl)-bicyclo(2,2,2)octan und
15% 1-Pentyl-4-(p-decyloxyphenoxycarbonyl)-bicyclo(2,2,2)octan

zeigt K −10° Sc* 58° $S_A$* 63° Ch 75° I und eine spontane Polarisation von 8nC/cm² bei 20°.

## Beispiel 2

Eine flüssigkristalline Phase bestehend aus

5% 2-p-Hexyloxyphenyl-5-octylpyrimidin,
5% 2-p-Heptyloxyphenyl-5-octylpyrimidin,
5% 2-p-Octyloxyphenyl-5-octylpyrimidin,
5% 2-p-Nonyloxyphenyl-5-octylpyrimidin,
25% 2-p-Nonyloxyphenyl-5-nonylpyrimidin,
13% r-1-Cyan-cis-4-(4'-nonyloxybiphenyl-4-yl)-1-octylcyclohexan,
12% r-1-Cyan-cis-4-(4'-heptylbiphenyl-4-yl)-1-butylcyclohexan,
10% R-4-(5-Hexylpyrimidin-2-yl)-phenyl-2-chlorpropionat,
10% 1-Pentyl-4-(p-octyloxyphenoxycarbonyl)-bicyclo(2,2,2)octan und
10% 1-Pentyl-4-(p-decyloxyphenoxycarbonyl)-bicyclo(2,2,2)octan

zeigt K −15° Sc* 61° $S_A$* 65° Ch 79° I und eine spontane Polarisation von 11nC/cm² bei 20°.

Beispiel 3

Eine flüssigkristalline Phase bestehend aus
3% 2-p-Hexyloxyphenyl-5-octylpyrimidin,
3% 2-p-Heptyloxyphenyl-5-octylpyrimidin,
3% 2-p-Octyloxyphenyl-5-octylpyrimidin,
3% 2-p-Nonyloxyphenyl-5-octylpyrimidin,
25% 2-p-Nonyloxyphenyl-5-nonylpyrimidin,
10% R-4-(5-Hexylpyrimidin-2-yl)-phenyl-2-chlorpropionat,
20% r-1-Cyan-cis-4-(4'-octyloxybiphenyl-4-yl)-1-butylcyclohexan,
15% r-1-Cyan-cis-4-(4'-heptylbiphenyl-4-yl)-1-hexylcyclohexan,
6% r-1-Cyan-cis-4-(trans-4-pentylcyclohexyl)-1-(trans-4-pentylcyclohexyl)-cyclohexan,
6% 1-Pentyl-4-(p-octyloxyphenoxycarbonyl)-bicyclo(2,2,2)octan und
6% 1-Pentyl-4-(p-decyloxyphenoxycarbonyl)-bicyclo(2,2,2)octan
zeigt K −12° Sc* 59° $S_A$* 69° Ch 82° I und eine spontane Polarisation von 7nC/$cm^2$ bei 20°.

**Patentansprüche**

1. Verwendung von Bicyclooctanestern der Formel I

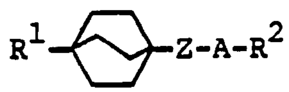

I

worin

$R^1$ und $R^2$ jeweils eine Alkylgruppe mit 4 bis 15 C-Atomen, worin auch eine oder mehrere nicht banachbarte $CH_2$-Gruppen durch —O—, —S—, —CO—, —$CHCH_3$—O—, —$CHCH_3$—, —CH-Halogen-, —CHCN—, —O—CO—, —O—COO—, —CO—O— und/oder —CH=CH— ersetzt sein können,

Z —CO—O— oder —O—CO— und

A unsubstituiertes oder durch Fluor lateral substituiertes 1,4-Phenylen oder 4,4'-Biphenylyl bedeutet, worin auch eine oder mehrere CH-Gruppen durch N ersetzt sein können,

als Komponenten chiral getilteter smektischer Phasen.

2. Chirale getiltete smektische flüssigkristalline Phase, enthaltend mindestens drei Verbindungen der Formel I nach Anspruch 1.

3. Chirale getiltete smektische flüssigkristalline Phase mit mindestens einer Verbindung der Formel I nach Anspruch 1, dadurch gekennzeichnet, daß sie eine flüssigkristalline Komponente mit negativer dielektrischer Anisotropie enthält.

4. Phase nach Anspruch 3, dadurch gekennzeichnet, daß sie als Komponente mit negativer dielektrischer Anisotropie mindestens eine das Strukturelement A, B oder C

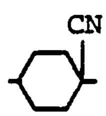

A

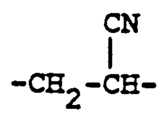

B

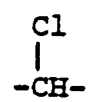

C

aufweisende Verbindung enthält.

5. Elektrooptisches Anzeigeelement, dadurch gekennzeichnet, daß es als Dielektrikum eine Phase nach Anspruch 2, 3 oder 4 enthält.

**Revendications**

1. Utilisation d'esters de bicyclooctane de formule I

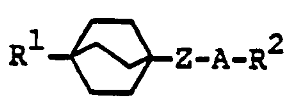

I

dans laquelle

$R^1$ et $R^2$ représentent chacun un groupe alkyle ayant de 4 à 15 atomes de C, où aussi un ou plusieurs groupes $CH_2$- non voisins peuvent être remplacés par —O—, —S—, —CO—, —$CHCH_3$—O—, —$CHCH_3$—, —CH-halogène-, —CHCN—, —O—CO—, —O—COO—, —CO—O— et/ou —CH=CH—,

Z représente —CO—O— ou —O—CO— et

A représente un 1,4-phénylène ou un 4,4'-biphénylyle, non substitués ou substitués latéralement par du fluor, où aussi un ou plusieurs des groupes CH- peuvent être substitués par N,
comme composants de phases smectiques obliques chirales.

2. Phase à cristaux liquides smectiques oblique chirale comportant au moins trois composés de formule I selon la revendication 1.

3. Phase à cristaux liquides smectique oblique chirale comportant au moins un composé de formule I selon la revendication 1, caractérisé en ce qu'elle comporte un composant à cristaux liquides ayant une anisotropie diélectrique négative.

4. Phase selon la revendication 3, caractérisé en ce qu'elle comporte, comme composant ayant une anisotropie diélectrique négative au moins un composé présentant l'élément structurel A, B ou C

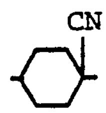

A

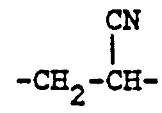

B

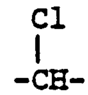

C

5. Elément d'affichage électrooptique caractérisé en ce qu'il comporte comme diélectrique une phase selon l'une quelconque des revendications 2, 3 ou 4.

**Claims**

1. Use of bicyclooctane esters of the formula I

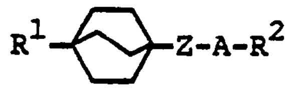

I

wherein

$R^1$ and $R^2$ are each an alkyl group with 4 to 15 C atoms, wherein one or more non-adjacent $CH_2$ groups can also be replaced by —O—, —S—, —CO—, —$CHCH_3$—O—, —$CHCH_3$—, —CH-halogen-, —CHCN—, —O—CO—, —O—COO—, —CO—O— and/or —CH=CH—,

Z is —CO—O— or —O—CO— and

A is 1,4-phenylene or 4,4'-biphenylyl which is unsubstituted or substituted laterally by fluorine and wherein one or more CH groups can also be replaced by N,
as components of chirally tilted smectic phases.

2. Chiral tilted smectic liquid crystal phase containing at least three compounds of the formula I as claimed in claim 1.

3. Chiral tilted smectic liquid crystal phase with at least one compound of the formula I as claimed in claim 1, containing a liquid crystal component with negative dielectric anisotropy.

4. Phase as claimed in claim 3, containing, as the component with negative dielectric anisotropy, at least one compound with the structural element A, B or C

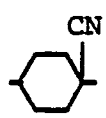

A

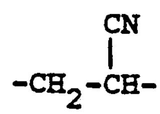

B

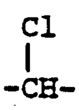

C

5. Electrooptical display element, containing a phase as claimed in claim 2, 3 or 4 as the dielectric.